# DEMANDE DE BREVET EUROPEEN

(11) **EP 3 588 463 A1**
(43) Date de publication de la demande: **01.01.2020**
(21) Numéro de dépôt: 19182413.5
(22) Date de dépôt: 25.06.2019
(51) Int. Cl.: G08G 1/01, G05D 1/02, G08G 1/0967, G08G 1/04

(54) **DISPOSITIF ÉLECTRONIQUE ET PROCÉDÉ DE SURVEILLANCE D'UN ENSEMBLE DE VÉHICULES AUTOMOBILES AUTONOMES, SYSTÈME DE TRANSPORT ET PROGRAMME D'ORDINATEUR ASSOCIÉS**

(30) Priorité: 26.06.2018 FR 1855699
(71) Demandeur: Transdev Group, 92130 Issy les Moulineaux (FR)
(72) Inventeur: BEAUVILLAIN, Alexis, 91300 MASSY (FR)
(74) Mandataire: Lavoix

(57) **Abrégé**

Ce dispositif électronique (20) de surveillance d'un ensemble (12) de véhicules automobiles autonomes (14) comprend :
- un module de détection (32) configuré pour détecter un évènement (E) associé à une pluralité (P) de véhicules (14) parmi l'ensemble (12) de véhicules automobiles autonomes (14) ;
- un module de calcul (34) configuré pour calculer, en fonction de l'événement (E) détecté, une consigne de limitation du mouvement pour chaque véhicule de ladite pluralité (P) de véhicules (14) ;
- un module de transmission (36) configuré pour transmettre la ou les consignes calculées à la pluralité (P) de véhicules (14) associée à l'événement (E) détecté.

## Description

La présente invention concerne un dispositif électronique de surveillance d'un ensemble de véhicules automobiles autonomes.

L'invention concerne aussi un système de transport comprenant un ensemble de véhicules automobiles autonomes et un tel dispositif électronique de surveillance configuré pour surveiller ledit ensemble de véhicules automobiles autonomes.

L'invention concerne également un procédé de surveillance d'un ensemble de véhicules automobiles autonomes, le procédé étant mis en oeuvre par un tel dispositif électronique de surveillance.

L'invention concerne aussi un programme d'ordinateur comportant des instructions logicielles qui, lorsqu'elles sont exécutées par un ordinateur, mettent en oeuvre un tel procédé de surveillance.

L'invention concerne le domaine des véhicules automobiles autonomes, en particulier des véhicules automobiles autonomes ayant un niveau d'automatisation (de l'anglais *level of automation*) supérieur ou égal à 3 selon le barème de l'Organisation Internationale des Constructeurs Automobiles (OICA).

Classiquement, un véhicule automobile autonome, notamment un véhicule autonome ayant un niveau d'automatisation égal à 3, 4 ou 5 selon le barème de l'OICA est équipé d'une pluralité de capteurs et d'un ou plusieurs calculateurs couplés à ces capteurs, pour permettre par exemple au véhicule autonome de se positionner sur la chaussée et de réguler sa vitesse en fonction du trafic automobile, d'éviter une collision avec un autre véhicule ou un obstacle, de détecter un changement de trajectoire ou encore d'effectuer une manoeuvre de stationnement.

Toutefois, la sécurité d'un système de transport comprenant un ensemble de tels véhicules automobiles autonomes peut encore être améliorée.

Le but de l'invention est alors de proposer un dispositif électronique et un procédé associé de surveillance d'un ensemble de véhicules automobiles autonomes permettant d'améliorer encore la sécurité des passagers à bord de tels véhicules automobiles.

A cet effet, l'invention a pour objet un dispositif électronique de surveillance d'un ensemble de véhicules automobiles autonomes, le dispositif comprenant :
- un module de détection configuré pour détecter un évènement associé à une pluralité de véhicules parmi l'ensemble de véhicules automobiles autonomes ;
- un module de calcul configuré pour calculer, en fonction de l'évènement détecté, une consigne de limitation du mouvement pour chaque véhicule de ladite pluralité de véhicules ;
- un module de transmission configuré pour transmettre la ou les consignes calculées à la pluralité de véhicules associée à l'événement détecté.

Ainsi, avec le dispositif électronique de surveillance selon l'invention, le module de détection permet de détecter un évènement susceptible d'impacter la sécurité de la pluralité de véhicules, puis le module de calcul permet de calculer une consigne de limitation du mouvement pour chaque véhicule de ladite pluralité de véhicules, ceci en fonction de l'événement détecté, et le module de transmission transmet ensuite les consignes calculées à ladite pluralité de véhicules, afin que chacun de la pluralité de véhicules limite son mouvement compte tenu de la consigne reçue.

Le dispositif électronique de surveillance selon l'invention permet alors d'améliorer la sécurité des passagers à bord de tels véhicules automobiles autonomes, en commandant une limitation du mouvement de chaque véhicule pour une pluralité de véhicules à la fois, ceci à partir de la détection d'un évènement commun à cette pluralité.

Ceci est encore plus avantageux lorsque l'événement n'est pas nécessairement détectable à l'aide de capteurs embarqués à bord de chaque véhicule autonome respectif, ou bien lorsque l'événement est détectable seulement par certains véhicules de ladite pluralité de véhicules.

A titre d'exemple, le dispositif électronique de surveillance selon l'invention est alors particulièrement avantageux lorsque l'événement détecté est un évènement météorologique, tel que du brouillard, du verglas, de la neige, de la pluie, du vent ; une densité anormale d'éléments de trafic ; ou encore une attaque, telle qu'une cyberattaque ou une attaque terroriste, à l'encontre des véhicules automobiles autonomes.

Suivant d'autres aspects avantageux de l'invention, le dispositif électronique de surveillance comprend une ou plusieurs des caractéristiques suivantes, prises isolément ou suivant toutes les combinaisons techniquement possibles :
- le module de calcul est configuré pour calculer une unique consigne de limitation du mouvement pour la pluralité de véhicules ;
- le module de transmission est configuré pour transmettre, à la pluralité de véhicules associée à l'événement détecté, un unique message de commande d'une limitation du mouvement du véhicule, ledit message de commande incluant la consigne calculée ;
- la consigne de limitation du mouvement comporte une limitation de la vitesse du véhicule et/ou une limitation de variation de la vitesse du véhicule ;
- l'évènement détecté par le module de détection est choisi parmi le groupe consistant en : un évènement météorologique, une densité élevée d'éléments de trafic et une attaque à l'encontre de la pluralité de véhicules ;
- le module de calcul est configuré pour calculer chaque consigne de limitation du mouvement via une sélection, en fonction d'une intensité de l'événement détecté, d'un niveau parmi plusieurs niveaux de consigne,
   un niveau maximal de consigne correspondant de préférence à un arrêt du véhicule ;
- les valeurs de consigne associées aux niveaux de consigne dépendent d'un type de l'événement détecté,
   le type de l'événement détecté étant de préférence choisi parmi le groupe consistant en :
   + un type d'événement météorologique, tel que du brouillard, du verglas, de la neige, de la pluie, du vent ;
   + une densité anormale d'éléments de trafic ; et
   + un type d'attaque, tel qu'une cyberattaque, une attaque terroriste.

L'invention a également pour objet un système de transport comprenant un ensemble de véhicules automobiles autonomes et un dispositif électronique de surveillance configuré pour surveiller ledit ensemble de véhicules automobiles autonomes, le dispositif électronique de surveillance étant tel que défini ci-dessus.

Suivant d'autres aspects avantageux de l'invention, le système de transport comprend une ou plusieurs des caractéristiques suivantes, prises isolément ou suivant toutes les combinaisons techniquement possibles :
- chaque véhicule automobile autonome présente un niveau d'automatisation supérieur ou égal à 3 selon le barème de l'Organisation Internationale des Constructeurs Automobiles ; et
- chaque véhicule automobile autonome comprend un module de réception configuré pour recevoir une consigne de limitation du mouvement de la part du dispositif électronique de surveillance et un module de pilotage d'une trajectoire du véhicule, le module de pilotage étant configuré pour commander une limitation du mouvement du véhicule en fonction de la consigne de limitation reçue.

L'invention a également pour objet un procédé de surveillance d'un ensemble de véhicules automobiles autonomes, le procédé étant mis en oeuvre par un dispositif électronique de surveillance et comprenant :
- la détection d'un évènement associé à une pluralité de véhicules parmi l'ensemble de véhicules automobiles autonomes ;
- le calcul, en fonction de l'évènement détecté, d'une consigne de limitation du mouvement pour chaque véhicule de ladite pluralité de véhicules ;
- la transmission de la ou des consignes calculées à la pluralité de véhicules associée à l'événement détecté.

L'invention a également pour objet un programme d'ordinateur comportant des instructions logicielles qui, lorsqu'elles sont exécutées par un ordinateur, mettent en oeuvre un procédé de surveillance tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique d'un système de transport selon l'invention, comprenant un ensemble de véhicules automobiles autonomes et un dispositif électronique de surveillance configuré pour surveiller ledit ensemble ; et
- la figure 2 est un organigramme d'un procédé, selon l'invention, de surveillance de l'ensemble de véhicules automobiles autonomes de la figure 1.

Dans la suite de la description, l'expression « sensiblement égal à » désigne une relation d'égalité à plus ou moins 10 %, de préférence à plus ou moins 5 %.

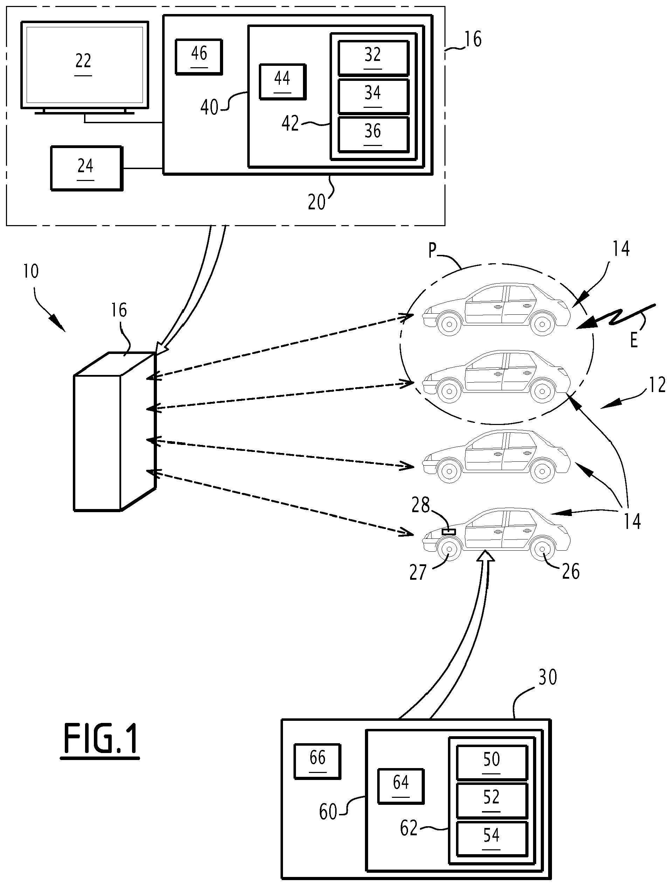

Sur la figure 1, un système de transport 10 comprend un ensemble 12 de plusieurs véhicules automobiles autonomes 14 et une plateforme externe 16 de supervision de l'ensemble 12 de véhicules automobiles autonomes 14. La plateforme externe de supervision 16 comprend un dispositif électronique 20 de surveillance dudit ensemble de véhicules automobiles autonomes 14. En complément, la plateforme externe de supervision 16 comprend un écran d'affichage 22 et des moyens d'entrée/sortie 24, tels qu'un clavier et une souris, chacun étant relié au dispositif électronique de surveillance 20.

Chaque véhicule automobile 14 comprend, de manière connue, des roues arrière 26, des roues avant 27, un moteur 28 relié mécaniquement via une chaîne de transmission (non représentée) aux roues arrière 26 et/ou avant 27 pour l'entraînement desdites roues 26, 27 en rotation autour de leur axe, un système de direction (non représenté), adapté pour agir sur les roues 26 et/ou 27 du véhicule 14 de manière à modifier l'orientation de sa trajectoire, et un système de freinage (non représenté), adapté pour exercer une force de freinage sur les roues 26, 27 du véhicule 14.

Chaque véhicule automobile 14 est typiquement constitué par un véhicule à traction et/ou propulsion électrique. A cet effet, le moteur 28 est constitué par un moteur électrique, et le véhicule 14 comprend une batterie électrique (non représentée) raccordée électriquement au moteur 28 pour l'alimentation du moteur 28 en électricité.

Chaque véhicule automobile 14 est un véhicule autonome. A cet effet, le véhicule automobile 14 comprend un dispositif électronique de conduite autonome 30 adapté pour piloter le véhicule de manière autonome en recevant des informations sur l'environnement du véhicule 14 par l'intermédiaire de capteurs (non représentés) et en agissant sur le moteur 28, le système de direction et le système de freinage, de manière à modifier la vitesse, l'accélération et la trajectoire du véhicule 14 en réaction aux informations reçues.

Chaque véhicule automobile autonome 14 présente de préférence un niveau d'automatisation supérieur ou égal à 3 selon le barème de l'Organisation Internationale des Constructeurs Automobiles (OICA). Le niveau d'automatisation est alors égal à 3, c'est-à-dire une automatisation conditionnelle (de l'anglais *Conditional Automation*), ou égal à 4, c'est-à-dire une automatisation élevée (de l'anglais *High Automation*), ou encore égal à 5, c'est-à-dire une automatisation complète (de l'anglais *Full Automation*).

Selon le barème de l'OICA, le niveau 3 d'automatisation conditionnelle correspond à un niveau pour lequel le conducteur n'a pas besoin de surveiller en permanence la conduite dynamique, ni l'environnement de conduite, tout en devant toujours être en mesure de reprendre le contrôle du véhicule automobile autonome 14. Selon ce niveau 3, un système de gestion de la conduite autonome, embarqué à bord du véhicule automobile autonome 14, effectue alors la conduite longitudinale et latérale dans un cas d'utilisation défini et est apte à reconnaître ses limites de performance pour demander alors au conducteur de reprendre la conduite dynamique avec une marge de temps suffisante.

Le niveau 4 d'automatisation élevée correspond à un niveau pour lequel le conducteur n'est pas requis dans un cas d'utilisation défini. Selon ce niveau 4, le système de gestion de la conduite autonome, embarquée à bord du véhicule automobile autonome 14, exécute alors la conduite dynamique latérale et longitudinale dans toutes les situations de ce cas d'utilisation défini.

Le niveau 5 d'automatisation complète correspond enfin à un niveau pour lequel le système de gestion de la conduite autonome, embarqué à bord du véhicule automobile autonome 14, effectue la conduite dynamique latérale et longitudinale dans toutes les situations rencontrées par le véhicule automobile autonome 14, pendant tout son trajet. Aucun conducteur n'est alors requis.

Le dispositif électronique de surveillance 20 comprend un module 32 de détection d'un évènement E associé à une pluralité P de véhicules 14 parmi l'ensemble 12 de véhicules automobiles autonomes 14.

Le dispositif électronique de surveillance 20 comprend également un module 34 de calcul, en fonction de l'événement détecté E, d'une consigne de limitation du mouvement pour chaque véhicule 14 de ladite pluralité P de véhicules et un module 36 de transmission de la ou des consignes calculées à la pluralité P de véhicules 14 associée à l'événement détecté E.

L'homme du métier comprendra que la pluralité P de véhicules 14 correspond à tout ou partie de l'ensemble 12 de véhicules automobiles autonomes 14.

Dans l'exemple de la figure 1, le dispositif électronique de surveillance 20 comprend une première unité de traitement d'informations 40 formée par exemple d'une première mémoire 42 et d'un premier processeur 44 associé à la première mémoire 42. Le dispositif électronique de surveillance 20 comprend un premier émetteur-récepteur 46, configuré notamment pour échanger, sous forme d'ondes radioélectriques, des données avec un ou plusieurs véhicules automobiles autonomes 14 correspondants, en particulier ceux de la pluralité P.

Le dispositif électronique de conduite autonome 30 comprend un module de réception 50 configuré pour recevoir une consigne de limitation du mouvement de la part du dispositif électronique de surveillance 20, et un module 52 de pilotage d'une trajectoire du véhicule, le module de pilotage 52 étant configuré notamment pour commander une limitation du mouvement du véhicule 14 en fonction de la consigne de limitation reçue.

Le dispositif électronique de conduite autonome 30 comprend un module de géolocalisation 54 pour déterminer la position du véhicule automobile 14, ainsi qu'en complément la vitesse et l'accélération du véhicule 14.

Par « position », que celle-ci concerne notamment un véhicule 14 ou un évènement détecté E, on entend la position géographique de l'élément, tel que le véhicule 14 ou l'événement détecté E, c'est-à-dire les coordonnées de l'élément dans un référentiel prédéfini, tel que le référentiel terrestre.

Dans l'exemple de la figure 1, le dispositif électronique de conduite autonome 30 comprend une deuxième unité de traitement d'informations 60 formée par exemple d'une deuxième mémoire 62 et d'un deuxième processeur 64 associé à la deuxième mémoire 62. Le dispositif électronique de conduite autonome 30 comprend un deuxième émetteur-récepteur 66, configuré notamment pour échanger, sous forme d'ondes radioélectriques, des données avec le dispositif électronique de surveillance 20, en particulier avec son premier émetteur-récepteur 46.

Dans l'exemple de la figure 1, le module de détection 32, le module de calcul 34 et le module de transmission 36 sont réalisés chacun sous forme d'un logiciel, ou d'une brique logicielle, exécutables par le premier processeur 44. La première mémoire 42 du dispositif électronique de surveillance 20 est alors apte à stocker un logiciel de détection configuré pour détecter l'événement E associé à la pluralité P de véhicules 14 parmi l'ensemble 12 de véhicules automobiles autonomes 14, un logiciel de calcul configuré pour calculer, en fonction de l'événement détecté E, une consigne de limitation du mouvement pour chaque véhicule 14 de ladite pluralité P de véhicules et un logiciel de transmission configuré pour transmettre la ou les consignes calculées à la pluralité P de véhicules associée à l'évènement détecté E. Le premier processeur 44 est alors apte à exécuter chacun des logiciels parmi le logiciel de détection, le logiciel de calcul et le logiciel de transmission.

En variante non représentée, le module de détection 32, le module de calcul 34 et le module de transmission 36 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Lorsque le dispositif électronique de surveillance 20 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comportant des instructions logicielles.

Le module de détection 32 est configuré pour détecter l'évènement E associé à la pluralité P de véhicules 14, cet évènement E concernant la pluralité P de véhicules 14 à la fois. L'évènement E apte à être détecté par le module de détection 32 est par exemple choisi parmi le groupe consistant en : un évènement météorologique, une densité élevée d'éléments de trafic et une attaque à l'encontre de la pluralité P de véhicules 14.

Le module de détection 32 est par exemple relié à une station météorologique, non représentée, et est configuré pour recevoir, de la part de la station météorologique, une liste d'évènements météorologiques, régulièrement mise à jour, puis pour filtrer ladite liste afin de conserver uniquement les évènements météorologiques concernant une zone géographique où se trouvent les véhicules automobiles autonomes 14 de l'ensemble 12. Le module de détection 32 est configuré en outre pour retenir, parmi les évènements météorologiques concernant ladite zone géographique, seulement ceux présentant une intensité supérieure à un seuil d'intensité prédéfini. Le module de détection 32 est alors par exemple configuré pour associer chaque évènement météorologique retenu à un ou plusieurs véhicules automobiles autonomes 14 en fonction, d'une part, de la position de l'évènement météorologique retenu, et d'autre part, de la position de chaque véhicule automobile autonome 14. Chaque évènement météorologique détecté est alors un évènement météorologique retenu associé à une pluralité P donnée de véhicules automobiles autonomes 14.

Chaque évènement météorologique est, par exemple, du type choisi parmi le groupe consistant en : du brouillard, du verglas, de la neige, de la pluie et du vent. Le seuil d'intensité prédéfini dépend alors de préférence du type de l'évènement météorologique.

En complément ou en variante, le module de détection 32 est par exemple relié à un système de vidéosurveillance d'espaces publics, non représenté, et est configuré pour recevoir, de la part du système de vidéosurveillance, une succession d'images des espaces publics, prises régulièrement, puis pour filtrer ladite succession d'images afin de conserver seulement les images concernant une zone géographique où se trouvent les véhicules automobiles autonomes 14 de l'ensemble 12. Le module de détection 32 est configuré en outre pour retenir, parmi les images concernant ladite zone géographique, seulement celles présentant une densité d'éléments de trafic supérieure à un seuil de densité prédéfini. Le module de détection 32 est alors par exemple configuré pour associer chaque image retenue à un ou plusieurs véhicules automobiles autonomes 14 en fonction, d'une part, de la position de l'espace public associée à l'image retenue, et d'autre part, de la position de chaque véhicule automobile autonome 14. Chaque densité élevée d'éléments de trafic détectée correspond alors à une image retenue associée à une pluralité P donnée de véhicules automobiles autonomes 14.

Chaque élément de trafic est un élément apte à circuler et/ou à traverser une voie de circulation. La voie de circulation est une voie permettant la circulation d'un élément de trafic, en particulier d'un véhicule automobile, tel qu'un véhicule automobile autonome 14.

Chaque élément de trafic est en particulier un élément apte à se trouver dans une zone de détection correspondant à un champ de vue du système de vidéosurveillance.

Chaque élément de trafic est par exemple choisi parmi le groupe consistant en : un véhicule motorisé, un véhicule non-motorisé, un piéton et un animal.

En complément ou en variante, le module de détection 32 est par exemple relié à chacun des véhicules automobiles autonomes 14 de l'ensemble 12, et est configuré pour recevoir, de la part chaque véhicule automobile autonome 14, un ou plusieurs messages d'état dudit véhicule. Le module de détection 32 est configuré en outre pour retenir, parmi les messages d'état reçus, seulement ceux indiquant une anomalie grave, c'est-à-dire ayant une gravité supérieure à un seuil de gravité prédéfini. Une anomalie grave est typiquement une anomalie dont l'occurrence engendre un risque relatif à la sécurité du véhicule automobile autonome 14. Une anomalie grave est par exemple une anomalie impactant le système de direction et/ou le système de freinage du véhicule automobile autonome 14. Le module de détection 32 est alors par exemple configuré pour associer chaque anomalie grave à un ou plusieurs véhicules automobiles autonomes 14 en fonction de la position du ou des véhicules automobiles autonomes 14 ayant émis le ou les messages d'état correspondant à cette anomalie. Chaque anomalie grave est considérée comme potentiellement révélatrice d'une attaque, en particulier si elle concerne plusieurs véhicules automobiles autonomes 14 à la fois. Chaque attaque détectée correspond alors à une anomalie grave associée à une pluralité P donnée de véhicules automobiles autonomes 14.

Le module de calcul 34 est configuré pour calculer, en fonction de l'évènement E détecté, une consigne de limitation du mouvement pour chaque véhicule de ladite pluralité P de véhicules 14.

En complément facultatif, le module de calcul 34 est par exemple configuré pour calculer une unique consigne de limitation du mouvement pour la pluralité P de véhicules 14.

La consigne de limitation du mouvement comporte de préférence une limitation de la vitesse du véhicule 14 et/ou une limitation de la variation de vitesse du véhicule 14. La limitation de la variation de vitesse du véhicule est une limitation d'accélération ou de décélération du véhicule 14.

Par variation de vitesse, on entend une variation de la vitesse du véhicule en fonction du temps, c'est-à-dire une dérivée de la vitesse par rapport au temps. Par convention, une variation positive de vitesse est alors une accélération du véhicule 14, et une variation négative de vitesse est alors une décélération du véhicule 14.

En complément facultatif, le module de calcul 34 est configuré pour calculer chaque consigne de limitation du mouvement via une sélection, en fonction d'une intensité de l'évènement E détecté, d'un niveau parmi plusieurs niveaux de consigne N1, N2, N3, N4. L'homme du métier comprendra typiquement que plus l'intensité de l'évènement détecté E est élevée, plus le niveau de consigne sélectionné sera élevé, c'est-à-dire plus la limitation associée sera importante, i. e. plus la vitesse et/ou la variation de vitesse en valeur absolue du véhicule 14 sera faible.

A titre d'exemple, lorsque le type de l'évènement détecté E est du brouillard, plus le brouillard sera dense, plus la vitesse et/ou la variation de vitesse en valeur absolue du véhicule 14 résultant de la consigne calculée sera faible. De même, lorsque le type de l'évènement détecté E est de la neige ou de la pluie, plus la neige ou la pluie sera drue, plus la vitesse et/ou la variation de vitesse en valeur absolue du véhicule 14 résultant de la consigne calculée sera faible. De même encore, lorsque le type de l'évènement détecté E est du vent, plus le vent sera fort, c'est-à-dire plus la vitesse du vent sera élevée, plus la vitesse et/ou la variation de vitesse en valeur absolue du véhicule 14 résultant de la consigne calculée sera faible. Lorsque le type de l'évènement détecté E est une densité anormale d'éléments de trafic, plus la densité sera élevée, plus la vitesse et/ou la variation de vitesse en valeur absolue du véhicule 14 résultant de la consigne calculée sera faible.

Les niveaux de consigne N1, N2, N3, N4 sont par exemple prédéfinis.

Outre un niveau initial N0 correspondant à une consigne de fonctionnement nominal du véhicule 14, plusieurs niveaux de consigne N1, N2, N3, N4 sont prévus, tels que par exemple des premier N1, deuxième N2, troisième N3 et quatrième N4 niveaux de consigne, classés par ordre croissant.

Un niveau maximal de consigne, tel que le quatrième niveau de consigne N4, correspond de préférence à un arrêt du véhicule 14, la consigne calculée étant alors une consigne d'arrêt du véhicule.

Le premier niveau de consigne N1 correspond par exemple à une limitation de la vitesse du véhicule 14 à une vitesse inférieure ou égale à un premier seuil de vitesse et/ou à une limitation de la variation de vitesse du véhicule 14 à une variation de vitesse inférieure ou égale en valeur absolue à un premier seuil de variation de vitesse. Le deuxième niveau de consigne N2 correspond par exemple à une limitation de la vitesse du véhicule 14 à une vitesse inférieure ou égale à un deuxième seuil de vitesse, strictement inférieur au premier seuil de vitesse, et/ou à une limitation de la variation de vitesse du véhicule 14 à une variation de vitesse inférieure ou égale en valeur absolue à un deuxième seuil de variation de vitesse, strictement inférieur au premier seuil de variation de vitesse. A titre d'exemple analogue, le troisième niveau de consigne N3 correspond à une limitation de la vitesse du véhicule 14 à une vitesse inférieure ou égale à un troisième seuil de vitesse, strictement inférieur au deuxième seuil de vitesse, et/ou à une limitation de la variation de vitesse du véhicule 14 à une variation de vitesse inférieure ou égale en valeur absolue à un troisième seuil de variation de vitesse, strictement inférieur au deuxième seuil de variation de vitesse. L'homme du métier comprendra bien entendu que chaque seuil de variation de vitesse, en particulier chacun des premier, deuxième et troisième seuils de variation de vitesse, est positif, voire nul auquel cas la variation de vitesse limitée en valeur absolue à ce seuil nul est elle-même nulle.

En complément facultatif, les valeurs de consigne associées aux niveaux de consigne N1, N2, N3, N4 dépendent d'un type de l'évènement E détecté. Le type de l'évènement E détecté est de préférence choisi parmi le groupe consistant en : un type d'évènement météorologique, tel que du brouillard, du verglas, de la neige, de la pluie, du vent ; une densité anormale d'éléments de trafic ; et un type d'attaque, tel qu'une cyberattaque, une attaque terroriste. Autrement dit, dans l'exemple des premier N1, deuxième N2, troisième N3 et quatrième N4 niveaux de consigne, décrit précédemment, les valeurs des premier, deuxième et troisième seuil de vitesse, et/ou les valeurs des premier, deuxième et troisième seuil de variation de vitesse dépendent du type de l'évènement E détecté.

A titre d'exemple de ce complément facultatif, lorsque le type de l'évènement E détecté est du brouillard, le niveau initial N0 correspond à une vitesse du véhicule 14 sensiblement égale à 50 km/h, le premier seuil de vitesse est sensiblement égal à 37,5 km/h, le deuxième seuil de vitesse est sensiblement égal à 25 km/h et le troisième seuil de vitesse est sensiblement égal à 12,5 km/h, le niveau maximal N4 correspondant à un arrêt du véhicule 14, c'est-à-dire à une vitesse nulle. Lorsque le type de l'évènement détecté E est une densité anormale d'éléments de trafic, le niveau initial N0 correspond à une vitesse du véhicule 14 sensiblement égale à 20 km/h, le premier seuil de vitesse est sensiblement égal à 7,5 km/h, le deuxième seuil de vitesse est sensiblement égal à 5 km/h et le troisième seuil de vitesse est sensiblement égal à 2,5 km/h, le niveau maximal N4 correspondant à un arrêt du véhicule 14, c'est-à-dire à une vitesse nulle.

En complément facultatif encore, le type de la consigne de limitation du mouvement dépend du type de l'évènement E détecté, le type de la consigne de limitation étant choisi parmi une limitation de la vitesse du véhicule 14, une limitation de la variation de vitesse du véhicule 14 et une limitation combinée de la vitesse et de la variation de vitesse du véhicule 14.

A titre d'exemple de ce complément facultatif, lorsque le type de l'évènement E détecté est du brouillard ou encore du vent, le type de la consigne de limitation est une limitation de la vitesse du véhicule 14. Lorsque le type de l'évènement E détecté est du verglas, de la neige ou encore de la pluie, le type de la consigne de limitation est une limitation combinée de la vitesse et de la variation de vitesse du véhicule 14.

Les niveaux de consigne autres que le niveau maximal de consigne, tels que les premier N1, deuxième N2 et troisième N3 niveaux de consigne, sont par exemple échelonnés de manière linéaire entre le niveau initial N0 (correspondant à une consigne de fonctionnement nominal du véhicule 14) et le niveau maximal de consigne, tel que le quatrième niveau de consigne N4, correspond à un arrêt du véhicule 14.

A titre d'exemple, si le niveau initial N0 correspond à une vitesse du véhicule 14 égale à 50 km/h et le niveau maximal N4 correspond à un arrêt du véhicule 14, c'est-à-dire à une vitesse nulle, alors le premier seuil de vitesse est sensiblement égal à 37,5 km/h, le deuxième seuil de vitesse est sensiblement égal à 25 km/h et le troisième seuil de vitesse est sensiblement égal à 12,5 km/h.

Le module de transmission 36 est configuré pour transmettre la ou les consignes calculées à la pluralité P de véhicules 14 associée à l'évènement E détecté. Le module de transmission 36 est par exemple configuré pour transmettre, à chaque véhicule 14 de la pluralité P de véhicules 14 associée à l'évènement E détecté, un message de commande d'une limitation du mouvement du véhicule, ledit message de commande incluant la consigne calculée pour ledit véhicule 14.

En complément facultatif, le module de transmission 36 est configuré pour transmettre, à la pluralité P de véhicules 14 associée à l'évènement E détecté, un unique message de commande d'une limitation du mouvement du véhicule, ledit message de commande incluant l'unique consigne de limitation calculée.

Dans l'exemple de la figure 1, le module de réception 50, le module de pilotage 52 et le module de géolocalisation 54 sont réalisés chacun sous forme d'un logiciel, ou d'une brique logicielle, exécutables par le deuxième processeur 64. La deuxième mémoire 62 du dispositif électronique de conduite autonome 30 est alors apte à stocker un logiciel de réception configuré pour recevoir la consigne de limitation du mouvement de la part du dispositif électronique de surveillance 20, un logiciel de pilotage configuré notamment pour commander une limitation du mouvement du véhicule 14 en fonction de la consigne de limitation reçue, et un logiciel de géolocalisation configuré pour déterminer la position du véhicule automobile 14. Le deuxième processeur 64 est alors apte à exécuter chacun des logiciels parmi le logiciel de réception, le logiciel de pilotage et le logiciel de géolocalisation.

En variante non représentée, le module de réception 50, le module de pilotage 52 et le module de géolocalisation 54 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Lorsque le dispositif électronique de conduite autonome 30 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comportant des instructions logicielles.

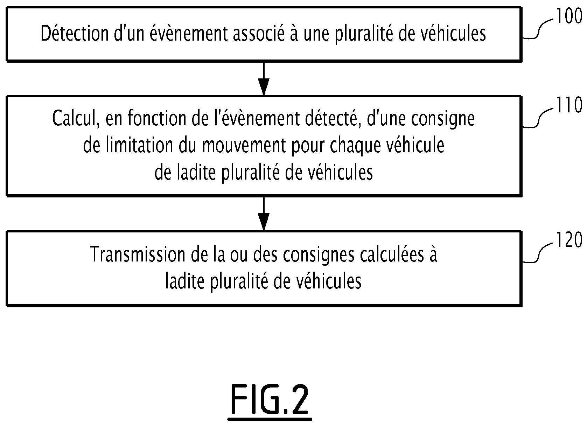

Le fonctionnement du dispositif électronique de surveillance 20 selon l'invention va désormais être expliqué à l'aide de la figure 2 représentant un organigramme du procédé, selon l'invention, de surveillance de l'ensemble 12 de véhicules automobiles autonomes 14, le procédé étant mis en oeuvre par le dispositif électronique de surveillance 20.

Lors d'une étape initiale 100, le dispositif de surveillance 20 détecte, via son module de détection 32, l'évènement E associé à la pluralité P de véhicules 14 parmi l'ensemble 12 de véhicules automobiles autonomes 14.

Comme indiqué précédemment, cette détection d'éventuel(s) évènement(s) E est par exemple effectuée à l'aide d'une station météorologique et/ou d'un système de vidéosurveillance reliés au module de détection 32.

Lors de cette étape de détection 100, le dispositif de surveillance 20 détecte par exemple un évènement météorologique, tel que du brouillard, du verglas, de la neige, de la pluie, ou encore du vent ; une densité anormale d'éléments de trafic ; ou encore une attaque, telle qu'une cyberattaque ou une attaque terroriste.

Le dispositif de surveillance 20 calcule ensuite, lors de l'étape suivante 110 et via son module de calcul 34, la consigne de limitation du mouvement pour chaque véhicule de ladite pluralité P de véhicules 14, ceci en fonction de l'évènement détecté E, comme expliqué précédemment.

Le dispositif de surveillance 20 transmet enfin, lors de l'étape suivante 120 et via son module de la transmission 36, la ou les consignes calculées à la pluralité P de véhicules 14 associée à l'évènement E détecté.

Lors de cette étape de transmission 120, le module de transmission 36 transmet par exemple, à chaque véhicule 14 de ladite pluralité P, un message de commande d'une limitation du mouvement du véhicule, ledit message de commande incluant la consigne calculée pour le véhicule 14 respectif.

En complément facultatif, lors de cette étape 120, le module de transmission 36 transmettre, à ladite pluralité P de véhicules 14, un unique message de commande d'une limitation du mouvement du véhicule, ledit message de commande incluant une unique consigne de limitation calculée pour ladite pluralité P de véhicules 14.

Ainsi, le dispositif électronique de surveillance 20 selon l'invention permet de détecter un évènement E susceptible d'impacter la sécurité de la pluralité P de véhicules 14, puis de calculer en fonction de l'évènement détecté E une consigne de limitation du mouvement pour chaque véhicule 14 de ladite pluralité P, et ensuite de transmettre les consignes calculées à ladite pluralité P de véhicules 14, ceci afin que chaque véhicule 14 de ladite pluralité P limite son mouvement en fonction de la consigne reçue.

Le dispositif électronique de surveillance 20 selon l'invention permet alors de commander une limitation du mouvement de chaque véhicule 14 pour la pluralité P de véhicules à la fois, ceci à partir de la détection de l'évènement E commun à cette pluralité P.

L'homme du métier observera notamment que le dispositif électronique de surveillance 20 selon l'invention permet de commander l'arrêt de la pluralité P de véhicules 14 à la fois, ceci lorsque la consigne de limitation calculée correspond à un arrêt du véhicule, en particulier lorsque la consigne de limitation calculée correspond à un niveau maximal de consigne et que celui-ci correspond à un arrêt du véhicule. Cette commande de l'arrêt de la pluralité P de véhicules 14 est particulièrement adaptée lorsque l'évènement détecté E présente une criticité particulière.

Néanmoins, dans certain(s) cas, par exemple lorsque l'évènement détecté E est une attaque terroriste, voire une cyberattaque, il est préférable de ne pas commander un arrêt de la pluralité P de véhicules 14, ceci afin de réduire un risque d'assaut physique à l'encontre des passagers de ladite pluralité P de véhicules 14. Dans ce ou ces cas, la consigne de limitation calculée correspond à un niveau intermédiaire de consigne, distinct d'un arrêt du véhicule.

L'homme du métier comprendra que le dispositif électronique de surveillance 20 est encore plus avantageux lorsque l'évènement E n'est pas détectable via des capteurs embarqués à bord de chaque véhicule autonome 14 respectif, ou bien lorsque l'évènement E est détectable seulement par certains véhicules 14 de ladite pluralité P.

On conçoit ainsi que le dispositif électronique de surveillance 20 selon l'invention, et le procédé de surveillance associé, permettent d'améliorer encore la sécurité des passagers à bord de tels véhicules automobiles autonomes 14.

## Revendications

1. Dispositif électronique (20) de surveillance d'un ensemble (12) de véhicules automobiles autonomes (14), le dispositif (20) comprenant :
- un module de détection (32) configuré pour détecter un évènement (E) associé à une pluralité (P) de véhicules (14) parmi l'ensemble (12) de véhicules automobiles autonomes (14) ;
- un module de calcul (34) configuré pour calculer, en fonction de l'évènement (E) détecté, une consigne de limitation du mouvement pour chaque véhicule de ladite pluralité (P) de véhicules (14) ;
- un module de transmission (36) configuré pour transmettre la ou les consignes calculées à la pluralité (P) de véhicules (14) associée à l'évènement (E) détecté.

2. Dispositif (20) selon la revendication 1, dans lequel le module de calcul (34) est configuré pour calculer une unique consigne de limitation du mouvement pour la pluralité (P) de véhicules (14).

3. Dispositif (20) selon la revendication 2, dans lequel le module de transmission (36) est configuré pour transmettre, à la pluralité (P) de véhicules (14) associée à l'évènement (E) détecté, un unique message de commande d'une limitation du mouvement du véhicule, ledit message de commande incluant la consigne calculée.

4. Dispositif (20) selon l'une quelconque des revendications précédentes, dans lequel la consigne de limitation du mouvement comporte une limitation de la vitesse du véhicule et/ou une limitation de variation de la vitesse du véhicule.

5. Dispositif (20) selon l'une quelconque des revendications précédentes, dans lequel l'évènement (E) détecté par le module de détection (32) est choisi parmi le groupe consistant en : un évènement météorologique, une densité élevée d'éléments de trafic et une attaque à l'encontre de la pluralité (P) de véhicules (14).

6. Dispositif (20) selon l'une quelconque des revendications précédentes, dans lequel le module de calcul (34) est configuré pour calculer chaque consigne de limitation du mouvement via une sélection, en fonction d'une intensité de l'évènement (E) détecté, d'un niveau parmi plusieurs niveaux de consigne (N1, N2, N3, N4),
un niveau maximal (N4) de consigne correspondant de préférence à un arrêt du véhicule (14).

7. Dispositif (20) selon la revendication 6, dans lequel les valeurs de consigne associées aux niveaux de consigne (N1, N2, N3, N4) dépendent d'un type de l'évènement (E) détecté,
le type de l'évènement (E) détecté étant de préférence choisi parmi le groupe consistant en :
+ un type d'évènement météorologique, tel que du brouillard, du verglas, de la neige, de la pluie, du vent ;
+ une densité anormale d'éléments de trafic ; et
+ un type d'attaque, tel qu'une cyberattaque, une attaque terroriste.

8. Système de transport (10) comprenant un ensemble (12) de véhicules automobiles autonomes (14) et un dispositif électronique de surveillance (20) configuré pour surveiller ledit ensemble (12) de véhicules automobiles autonomes (14), le dispositif électronique de surveillance (20) étant selon l'une quelconque des revendications précédentes.

9. Procédé de surveillance d'un ensemble (12) de véhicules automobiles autonomes (14), le procédé étant mis en oeuvre par un dispositif électronique de surveillance (20) et comprenant :
- la détection (100) d'un évènement (E) associé à une pluralité (P) de véhicules (14) parmi l'ensemble (12) de véhicules automobiles autonomes (14) ;
- le calcul (110), en fonction de l'évènement (E) détecté, d'une consigne de limitation du mouvement pour chaque véhicule de ladite pluralité (P) de véhicules (14) ;
- la transmission (120) de la ou des consignes calculées à la pluralité (P) de véhicules (14) associée à l'évènement (E) détecté.

10. Programme d'ordinateur comportant des instructions logicielles qui, lorsqu'elles sont exécutées par un ordinateur, mettent en oeuvre un procédé selon la revendication précédente.
